# EUROPEAN PATENT SPECIFICATION

(11) **EP 1 422 954 B1**
(45) Date of publication and mention of the grant of the patent: **03.05.2006**
(21) Application number: 03104087.6
(22) Date of filing: 05.11.2003
(51) Int. Cl.: H04Q 7/22

(54) **Method and system for transmitting a multimedia message and a foreground server**
Verfahren und System zur Übertragung einer Multimedia-Nachricht und ein Vordergrundserver
Procédé et système de transmission d'un message multimedia et un serveur de premier plan

(30) Priority: 07.11.2002 FI 20021998
(43) Date of publication of application: 26.05.2004
(73) Proprietor: TeliaSonera Finland Oyj, 00510 Helsinki (FI)
(72) Inventor: Korhonen, Jouni, 11100, Riihimäki (FI); Jalkanen, Tero, 00910, Helsinki (FI)
(74) Representative: Pursiainen, Timo Pekka

(56) References cited:
- WO-A-02/43414
- US-A1- 2002 132 608

## Description

The present invention relates to a method for transmitting a multimedia message from a server to a target server in a communication network, as presented in the preamble of claim 1. The invention also relates to a system for transmitting a multimedia message in a communication network, as described in the preamble of claim 3. In addition, the invention relates to a foreground server for transmitting a message between a server and a target server, as described in claim 7.

In the evolution of mobile communication service the Multimedia Messaging Service (MMS) following the Short Messaging Service (SMS) enables messages between terminals, the content of which messages can be comprised of images, audio files and text. MMS service provides an automatic and instant transmission of multimedia messages from a mobile communication device to another mobile communication device or to e-mail.

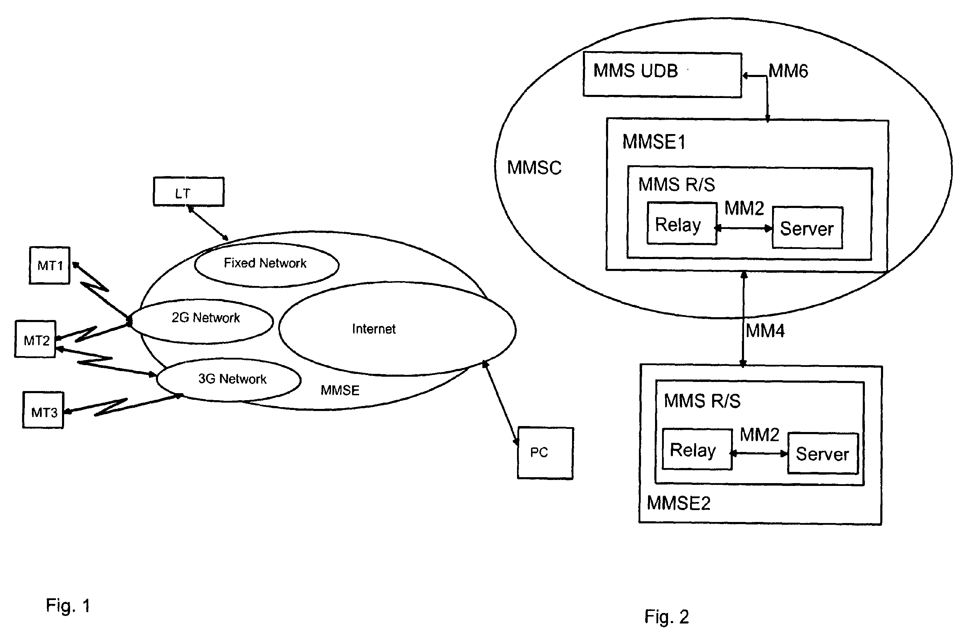

The MMS architecture combines different network types by connecting their existing messaging systems into one entity, an MMS environment (Multimedia Messaging Service Environment, MMSE). Fig. 1 presents an MMS environment, wherein mobile terminals MT1, MT2, MT3 have connections to mobile telephone networks (2G/3G network) as well as to a fixed network via a laptop computer LT. In addition, the computer (PC) in connected to the Internet. Fig. 2 presents MMS environments, wherein there are interfaces MMx (x = 1...7) between the network elements, of which interfaces the MM4 functions as an interface between two MMS Relay/Servers, one of which MMS Relay/Servers is located in the external environment MMSE2. The MMS Relay/Server is the core of the MMS services, which stores the MMS messages until the receiving end has been reached, as well as controls the seven interfaces in question, which connect the network elements as well as the external networks. The MMS Relay/Server forms a multimedia messaging service center (MMSC) with an MMS user database (MMS-UDB), which center is controlled by the operator.

The SMTP protocol (Simple Mail Transfer Protocol) is an e-mail transmission protocol known to a man skilled in the art, the function of which protocol is to specify the reliable and effective transmission of e-mail in the network. The protocol is platform-independent, and requires only a transmission path for the data, which is advantageous, because the messages transmitted in the Internet meet several different types of network transfer services along the way. In the SMTP protocol the server of the sender establishes a connection directly with the receiver's server, and stores the sent message until the message has been received. The SMTP server can also use other SMTP servers on the way in order to transmit the message. However, a SMTP server, which is on the way, requires data of the mailbox address of the final receiver and the server corresponding to it.

When transmitting MMS messages on the MM4 interface by using the SMTP protocol, the MMSC center of the sender has to know the address of the receiving MMSC center, as well as the functionalities it is capable of performing. If these functionalities are not known, the sender may send a message, which the receiver is not capable of handling. As a result of this, the message returns to the sender, which causes traffic, which both loads the MMSC centers as well as consumes expensive IP network connection. In connection with the multimedia messaging service specification, the described topic has not been discussed, which is why it cannot be solved with a common, generally known manner.

Publication EP1091601A2 discloses a method, wherein the first terminal sends content to another terminal. The sending party can process the data, which includes different media types (graphics, text, etc.). There is no knowledge of the receiver's corresponding capabilities. When sending an image message or the like to a receiving party, the service center of the sender sends a text-based (SMS) message, wherein it is disclosed that the content to be transferred comprises of graphics. If the receiver can process the content type, the image message is sent to it directly. If the receiver cannot do this, an address of a www-page, where the image message can be seen via an IP-based device, is presented in connection with the SMS message.

According to prior art, there has to be a direct connection from the MMSC center to the IP network between the operators, which causes a control problem, because the MMSC center has to be in a direct connection to the network that enables roaming, such as, for example, the GRX network (GPRS Roaming Exchange). The GRX network is a centered IP routing network, which connects different mobile telephone networks, such as the GPRS networks (GPRS = General Radio Packet Services) as well as UMTS networks (UMTS = Universal Mobile Telecommunications Systems). The GRX network makes roamings of transmission according to the Internet protocol (IP) between different mobile networks possible. An arrangement, wherein the MMSC centers are in direct contact with the IP network / GRX network between the operators, it is not sensible, for example, from the point of view of data security and junk mail control (screening). In larger systems the requirement for direct connections is not in practice possible because of the functional limitations of the system architecture.

One multimediacommunication system is disclosed in US 2002/0132608 where a mobile telephone that originates transmission can detect the media types and formats of a multimedia message that can be received by destination mobile telephones. The system comprises external terminals which are connected to mobile telephones, which are arranged to extend the range of data formats that mobile telephone can receive. Each of mobile telephones transmits information regarding the processing capability for each media type to MMS user database server when an external terminal is connected and the processing capability for each media type changes while the power supply is turned on.

Another multimedia messaging method is disclosed in WO 02/43414 that comprises steps for receiving a content from a sender and addressed to one or more recipient, accessing database comprising recipient data describing multimedia reception capabilities and/or reception preferences for at least on recipient, forming a notification message containing information that said media content is available to be streamed to the addressed recipient and transmitting the notification message to the addressed recipient.

The purpose of the present invention is to provide a foreground server for an MMS environment, which is used in answering to a service request, in which case no connection to the actual target server is necessary. The foreground server can store into its memory services and/or message types, which have transferred through it, thus learning automatically the extensions that are being used and are oncoming. A direct connection between the IP network and the MMSC center is no longer necessary.

More precisely, the method for transmitting multimedia messages according to the present invention is primarily characterized in what will be presented in the characterizing part of the independent claim 1. In addition, the system for transmitting multimedia messages according to the present invention is primarily characterized in what will be presented in the characterizing part of the independent claim 3. Further, the foreground server for transmitting multimedia messages between a server and a target server according to the present invention is primarily characterized in what will be presented in the characterizing part of the independent claim 7.

With the method according to the invention it is possible to reduce the problems between different MMSC implementations, such as the unnecessary transmission of too large or otherwise incompatible messages between MMSC centers. It is possible to be more certain of the target server support to process the message type, in which case the same message does not need to be processed several times, which lightens the otherwise already great load of the MMSC centers. In addition, the sender party does no longer need to be uncertain of the receipt of the message when sending messages between the customers of different operators (MMSC centers).

The present invention will be described in more detail with reference to the following drawings, in which
- Fig. 1: presents the basic architecture of the multimedia messaging service,
- Fig. 2: gives an example of a few basic elements of the multimedia messaging service, and
- Fig. 3: presents one advantageous embodiment of the method according to the invention for transmitting a multimedia message.

Before a more detailed description of the invention, it is to be noted that the presented system, which in the description consists of two operators A, B, an MMSC server CA, CB functioning in connection with the operator, and a foreground server FSA, FSB connected to it, as well as the data network NW between the operators A, B, is one advantageous embodiment of the method according to the invention. In practice, there can be more or less of the elements in question than described in the description. In addition to this, the described method according to the invention is limited in the description to the MMS environment and the interfaces (MM4) it includes. However, the method according to the invention can be applied in messaging manners and environments, whose function is, in principle, substantially the same as in the presented MMS environment.

The described foreground server is advantageously a conventional mail server, which in a known manner functions as an interface, for example, to the internal mail communications of a company by screening, for example, junk and advertisement mails from the communications. The task of a mail server is to limit the e-mail infrastructure (internal servers) of a company or the like out of reach of the outside world. Thus, the internal server connects first to a mail server when choosing to send e-mail outside the company.

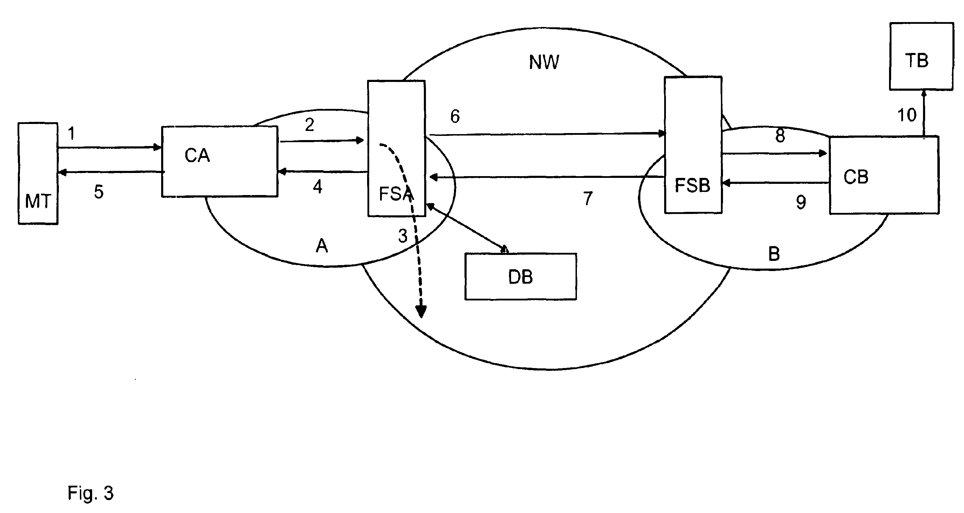

In the method according to the invention, the foreground server is connected to the operator network in connection with the server of the MMSC center onto the MM4 interface. Thus, the foreground server functions as an interface between the operator network as well as other data communication. In Fig. 3 the foreground server FSA of the first operator A is between the network NW between the operators A, B and the MMSC server CA of the operator A. The second foreground server FSB is correspondingly between the network NW between the operators A, B and the second MMSC server CB. Both foreground servers FSA, FSB store information on the MMSC centers and servers of other operators in the database.

When the user sends an MMS message (1) from his/her terminal MT to an MMSC server CA by advantageously using, for example, WAP protocol, the MMSC server CA of the operator A notices that the receiver is a customer of operator B. As a result of this, the MMSC server CA examines the address of the receiving MMSC server CB, to which the message is directed. In practice the direction (2) is targeted at the first foreground server FSA. The direction is based on the manner of the MM4 interface of the MMSC centers, wherein the address of the receiver's server is specified in a known manner according to the "resolving" protocol. Thus the local name service DNS (Domain Name System) MX configuration (Mail exchange) of the operator A forces substantially all the communications to travel via the foreground server FSA.

The foreground server FSA knows substantially all the possible SMTP level MMS extensions, which it has collected and learned during the SMTP negotiations with different target servers. The foreground server FSA offers these extensions in connection with a new initial negotiation. Learning the MMS extensions can advantageously be automated in the foreground server FSA in such a manner that the STMP initial negotiations with the foreground server FSA and the MMSC servers and/or foreground servers of other operators are stored in the cache. In other words, the foreground server FSA remembers previous SMTP negotiations, in which case it knows about the extensions supported by the server being contacted and the matter does not have to be checked again. If in connection with the negotiations it appears that the server knows new extensions, they are stored in the memory of the foreground server FSA, in which case they are known the next time as well. The foreground server FSA thus maintains a record of the extensions known by each target server. The foreground server FSA isolates the appropriate parts from the initial negotiation with its own MMSC server CA, which parts can be used in the initial negotiations towards the foreground server FSB of the operator B.

The foreground server FSA performs the routing of the MMS message and initially tries to connect directly to the MMSC server CB of the operator B. A direct connection is not, however, formed, but the foreground server FSA receives the address of the foreground server FSB corresponding to the object MMSC server CB as an answer to its address request from the name server DNS. The foreground server FSA starts a new SMTP initial negotiation and repeats, with respect to suitable parts, the SMTP command sequence used by the MMSC server CA of the operator A. The foreground server FSA assumes it is discussing with the receiving MMSC server CB, and the message is sent (6) along the IP network (e.g. GRX) to the network of the operator B. However, the message is received by the foreground server FSB of the operator B, which transmits the message further to the MMSC server CB. The receiving foreground server FSB receives, in connection with the SMTP negotiations, that address, to which the message is desired to be delivered (RCPT TO:mmscTB@B.com), i.e. in this example to the MMSC server CB. In the embodiment according to the invention the foreground servers FSA, FSB are used advantageously to transmit the incoming and going messaged through it forward to MMSC servers CA, CB, in which case the direct connection of the MMSC servers CA, CB to the communication network NW is not necessary.

If the receiver, i.e. the foreground server FSB of the operator B, will not/cannot perform the desired SMTP commands, the foreground server FSA of the operator A leaves the MMS message unsent (3). This action is taken when the acknowledgement request has not been set on in the MMS message.

If, however, the checking performed by the foreground server FSA results in a negative answer, the message is directed (4) back to the sending MMSC server CA when the acknowledgement request has been set on in the MMS message.

Without error situations the foreground server FSB of the operator B sends (7) information to the foreground server FSA of the operator A on the receipt of the message advantageously when an acknowledgement request has been set to the MMS message. The MMSC server CB of the operator B receives (8) the sent MMS message and sends (9) an acknowledgement to the foreground server FSB when a acknowledgement request has been set to the message. The purpose of the acknowledgement requests is to ensure the secure delivery of the message. The MMSC server CB transmits (10) the multimedia message further to the final terminal TB.

if errors occur during the SMTP negotiation/command sequence, for example the foreground server FSB of the operator B cannot receive an MMS message, the connection is broken and it is the responsibility of the foreground server FSA of the operator A to deal with the error situation in question. Thus, the user receives a message (5) in its terminal MT, wherein he/she is informed of the failure of the transmission.

In a second advantageous embodiment of the invention the extensions known by the target server CB are checked prior to transmitting the message. An application-specific (proprietary) SMTP extension is added between the MMSC server CA and the foreground server FSA, by means of which it is possible to peek behind the foreground server FSA and thus determine the MM4 extensions and SMTP extensions supported by the next MMSC center server CB, via the foreground server FSB.

In a chain of three servers (A-B-C) the peek function takes place in such a manner that the first server A requests the MM4 extensions of the third target server C from the second server B. The function cannot in a known manner be implemented with a conventional SMTP protocol, wherein the propagation takes place by always specifying the next target address (hop-by-hop). Because of this, a proprietary extension is required for the peek.

In practice, in the peek function the first server A does not need to advice the second server B to specifically request the extension data of the third server C. In other words, the second server B requests data from the server next in line, to which a connection is made according to routing data when the final target server (server C or some other server behind server C) is desired to be reached. The above-described event is implemented in such a manner that the second server B forms an SMTP connection to the next server C. After this, the second server B reads the MM4 extensions advertised by the server C, after which it breaks the connection with the server C in question. The MM4 extension data of the server C are restored via the proprietary extension to the server A further ordered by the server B. The proprietary protocol between the first A and second server B can be a command (non-standardized) added to a conventional SMTP protocol, or an independent protocol.

Next, an example of the negotiation between the MMSC server CA and the foreground server FSA will be presented. The foreground server FSA replies to the connection request of the MMSC server CA with a code 220 and its name, which is known as such. After this, the MMSC server CA checks the SMTP extension suitability of the foreground server by greeting it with an EHLO-greeting. If the receiving foreground server FSA supports SMTP extensions, it returns a code 250 (250-foo.FSA.com), as well as advertises that it also knows the MMS peek extension (250-MMS-EHLO-PEEK):

| | |
|---|---|
| FSA: | 220 foo. FSA.com foomailer Server 0.01 #19 ESMTP+IDENT ready at Fri, 9 Nov 2001 12:21:53 +0200 |
| CA: | EHLO center.a.etela.fi |
| FSA: | 250-foo.FSA.com Hello center.a.etela.fi |
| FSA: | 250- MMS- EHLO- PEEK |
| FSA: | 250 MMS ... |

Further, the sending MMSC server CA can look whether the foreground server FSA supports the peek extension (EHLO-PEEK foo@FSA.com) between two MMSC centers. If the extension is supported, the sending MMSC server CA knows how to make a peek request to the correct target server FSB via its foreground server FSA. For example:
CA: EHLO-PEEK foo@FSA.com
FSA: 250-foo.FSA.com Hello foregroundserver.FSB.fi
FSA: 250 MMS-RECEIVER-EXT1
FSA: 250",

After this, the foreground server FSA requests the initial negotiation parameters form the object foreground server FSB, which it returns to the MMSC server CA. The foreground server FSA advantageously stores the answer into the cache, in which case the information on the functions supported by the target server can be used the next time, and no actual connection to the target server FSB is necessary to be formed again.

It will be obvious that the present inventi on is not limited to the above-presented embodiment, but it can be modified within the scope of the appended claims.

## Claims

1. A method for transmitting a multimedia message from a server (CA) to a target server (CB) in a communication network (NW), where the server (CA) and the target server (CB) function in separate multimedia messaging service environments (MMSE) in relation to each other, **characterized in that**
- an initial negotiation between a foreground server (FSA) being connected to the server (CA) and a second foreground server (FSB) being connected to the target server (CB), is recorded and stored to the foreground server (FSA), after which
- the recorded initial negotiation is utilized when examining an information on features for multimedia messages being supported by the target server (CB), by means of which information
- a multimedia message is transmitted to the target server (CB).

2. The method according to claim 1, **characterized in that** a multimedia message is transmitted to the target server (CB) via a second foreground server (FSB).

3. A system for transmitting a multimedia message in a communication network (NM), which system comprises a server (CA) for sending a message as well as at least one target server (CB) for receiving the message, where said server (CA) and the target server (CB) are arranged to function in separate multimedia messaging service environments (MMSE) in relation to each other, **characterized in that**
- the system is arranged to record an initial negotiation between a foreground server (FSA) being connected to the server (CA) and a second foreground server (FSB) being connected to the target server (CB), and to store said initial negotiation to the foreground server (FSA), after which
- the system is capable of utilizing the recorded initial negotiation when examining an information on features for multimedia messages being supported by the target server (CB), by means of which information,
- the system is arranged to transmit a multimedia message to the target server (CB).

4. The system according to claim 3, **characterized in that** the data communication network (NW) comprises a mobile telephone network.

5. The system according to claim 3 or 4, **characterized in that** the system in addition comprises means for transmitting a multimedia message to an target server (CB) via the second foreground server (FSB).

6. The system according to any of the preceding claims 3-5, **characterized in that** the system in addition comprises a MM4 interface between the sever (CA) and the target server (CB).

7. A foreground server (FSA) for transmitting a message between a server (CA) and an target server (CB) in a communication network (NW), where said server (CA) and the target server (CB) are arranged to function in separate multimedia messaging service environments (MMSE) in relation to each other **characterized in that**
- the foreground server (FSA) is arranged to record an initial negotiation between the foreground server (FSA) being connected to the server (CA) and a second foreground server (FSB) being connected to the target server (CB), and to store said initial negotiation, after which
- the foreground server (FSA) is capable of utilizing the recorded initial negotiation when examining an information on features for multimedia messages being supported by the target server (CB), by means of which information,
- the foreground server (FSA) is arranged to transmit a multimedia message to the target server (CB).

8. The foreground server according to claim 7, **characterized in that** the communication network (NW) comprises a mobile telephone network.

## Patentansprüche

1. Verfahren zum Übertragen einer Multimedia-Nachricht von einem Server (CA) zu einem Ziel-Server (CB) in einem Kommunikationsnetzwerk (NW), wobei der Server (CA) und der Ziel-Server (CB) in Bezug aufeinander in getrennten Multimedia-Nachrichtendienst-Umgebungen (MMSE) ablaufen, **dadurch gekennzeichnet, dass**
- eine anfängliche Aushandlung zwischen einem Vordergrund-Server (FSA), der mit dem Server (CA) verbunden ist, und einem zweiten Vordergrund-Server (FSB), der mit dem Ziel-Server (CB) verbunden ist, aufgezeichnet wird und im Vordergrund-Server (FSA) gespeichert wird, so dass anschließend
- die aufgezeichnete anfängliche Aushandlung verwendet wird bei der Überprüfung einer Information auf Merkmale von Multimedia-Nachrichten, die durch den Ziel-Server (CB) unterstützt werden, wobei mit Hilfe dieser Information
- eine Multimedia-Nachricht an den Ziel-Server (CB) übertragen wird.

2. Verfahren nach Anspruch 1, **dadurch gekennzeichnet, dass** eine Multimedia-Nachricht an dem Ziel-Server (CB) über einen zweiten Vordergrund-Server (FSB) übertragen wird.

3. System zum Übertragen einer Multimedia-Nachricht in einem Kommunikationsnetzwerk (NM), wobei das System einen Server (CA) zum Senden einer Nachricht, sowie mindestens einen Ziel-Server (CB) zum Empfangen der Nachricht aufweist, wobei der Server (CA) und der Ziel-Server (CB) zum Betrieb in getrennten Multimedia-Nachrichtendienst-Umgebungen (MMSE) in Bezug aufeinander eingerichtet sind, **dadurch gekennzeichnet, dass**
- das System zum Aufzeichnen einer anfänglichen Aushandlung zwischen dem Vordergrund-Server (FSA), der mit dem Server (CA) verbunden ist, und einem zweiten Vordergrund-Server (FSB), der mit dem Ziel-Server (CB) verbunden ist, und zum Speichern der anfänglichen Aushandlung im Vordergrund-Server (FSA) eingerichtet ist, so dass anschließend
- das System die aufgezeichnete anfängliche Aushandlung bei der Überprüfung einer Information auf Merkmale von Multimedia-Nachrichten, die von dem Ziel-Server (CB) unterstützt werden, verwenden kann, wobei mit Hilfe dieser Information
- das System zur Übermittlung einer Multimedia-Nachricht an die Ziel-Server (CB) eingerichtet ist.

4. System nach Anspruch 3, **dadurch gekennzeichnet, dass** das Daten-Kommunikationsnetzwerk (NW) ein Mobiltelefon-Netzwerk umfasst.

5. System nach Anspruch 3 oder 4, **dadurch gekennzeichnet, dass** das System zusätzlich. Mittel zum Übertragen einer Multimedia-Nachricht an einen Ziel-Server (CB) über den zweiten Vordergrund-Server (FSB) aufweist.

6. System nach einem der Ansprüche 3 bis 5, **dadurch gekennzeichnet, dass** das System zusätzlich eine MM4-Schnittstelle zwischen dem Server (CA) und Ziel-Server (CB) aufweist.

7. Vordergrund-Server (FSA) zum Übermitteln einer Nachricht zwischen einem Server (CA) und einem Ziel-Server (CB) in einem Kommunikationsnetzwerk (NW), wobei der Server (CA) und der Ziel-Server (CB) zum Betrieb in getrennten Multimedia-Nachrichtendienst-Umgebungen (MMSE) in Bezug aufeinander eingerichtet sind, **dadurch gekennzeichnet, dass**
- der Vordergrund-Server (FSA) zum Aufzeichnen einer anfänglichen Aushandlung zwischen dem Vordergrund-Server (FSA), der mit dem Server (CA) verbunden ist, und einem zweiten Vordergrund-Server (FSB), der mit dem Ziel-Server (CB) verbunden ist, und zum Speichern der anfänglichen Aushandlung eingerichtet ist, so dass anschließend
- der Vordergrund-Server (FSA) die aufgezeichnete anfängliche Aushandlung zur Überprüfung einer Information auf Merkmale von Multimedia-Nachrichten, die durch den Ziel-Server (CB) unterstützt werden, wobei mit Hilfe dieser Information
- der Vordergrund-Server (FSA) zur Übermittlung einer Multimedia-Nachricht an den Ziel-Server (CB) eingerichtet ist.

8. Vordergrund-Server nach Anspruch 7, **dadurch gekennzeichnet, dass** das Kommunikationsnetzwerk (NW) ein Mobiltelefon-Netzwerk umfasst.

## Revendications

1. Procédé pour transmettre un message multimédia depuis un serveur (CA) à un serveur cible (CB) dans un réseau de communication (NW), le serveur (CA) et le serveur cible (CB) fonctionnant selon une relation réciproque dans des environnements de service de messagerie multimédia (MMSE) séparés, **caractérisé en ce que**
- une négociation initiale entre un serveur de premier plan (FSA) connecté au serveur (CA) et second serveur de premier plan (FSB) connecté au serveur cible (CB) est enregistré et mémorisé dans le serveur de premier plan (FSA), à la suite de quoi
- la négociation initiale enregistrée est utilisée lors de l'examen d'une information concernant des caractéristiques pour des messages multimédia supportés par le serveur cible (CB), information à l'aide de laquelle
- un message multimédia est transmis au serveur cible (CB).

2. Procédé selon la revendication 1, **caractérisé en ce qu'**un message multimédia est transmis au serveur cible (CB) au moyen d'un second serveur de premier plan (FSB).

3. Système pour transmettre un message multimédia dans un réseau de communication (NM), lequel système comprend un serveur (CA) pour envoyer un message ainsi qu'au moins un serveur cible (CB) pour recevoir un message, ledit serveur (CA) et le serveur cible (CB) étant agencés de manière à fonctionner selon une relation réciproque dans des environnements de service de messagerie multimédia (MMSE) séparés, **caractérisé en ce que**
- le système est agencé pour enregistrer une négociation initiale entre un serveur de premier plan (FSA) connecté au serveur (CA) et un second serveur de premier plan (FSB) connecté au serveur cible (CB), et mémoriser ladite négociation initiale dans le serveur de premier plan (FSA), à la suite de quoi
- le système est capable d'utiliser la négociation initiale enregistrée lors de l'examen d'une information concernant des caractéristiques pour des messages multimédia supportés par le serveur cible (CB), information à l'aide de laquelle
- le système est agencé de manière à transmettre un message multimédia au serveur cible (CB).

4. Système selon la revendication 3, **caractérisé en ce que** le réseau de communication de données (NW) comprend un réseau de téléphone mobile.

5. Système selon la revendication 3 ou 4, **caractérisé en ce que** le système comporte en outre des moyens pour transmettre un message multimédia à un serveur cible (CB) par l'intermédiaire du second serveur de premier plan (FSB).

6. Système selon l'une quelconque des revendications 3 - 5, **caractérisé en ce que** le système comporte en outre une interface MM4 entre le serveur (CA) et le serveur cible (CB).

7. Serveur de premier plan (FSA) pour transmettre un message entre un serveur (CA) et un serveur cible (CB) dans un réseau de communication (NW), ledit serveur (CA) et le serveur cible (CB) étant agencés de manière à fonctionner selon une relation réciproque dans des environnements de service de messagerie multimédia (MMSE) séparés, **caractérisé en ce que**
- le serveur de premier plan (FSA) est agencé de manière à enregistrer une négociation initiale entre un serveur de premier plan (FSA) connecté au serveur (CA) et un second serveur de premier plan (FSB) connecté au serveur cible (CB), et mémoriser ladite négociation initiale, à la suite de quoi
- le serveur de premier plan (FSA) est capable d'utiliser la négociation initiale enregistrée lors de l'examen d'une information concernant des caractéristiques pour des messages multimédia supportés par le serveur cible (CB), information à l'aide de laquelle
- le serveur de premier plan (FSA) est agencé de manière à transmettre un message multimédia au serveur cible (CB).

8. Serveur de premier plan selon la revendication 7, **caractérisé en ce que** le réseau de communication (NW) comprend un réseau de téléphone mobile.
